# EUROPÄISCHE PATENTSCHRIFT

(11) **EP 3 361 592 B1**
(45) Veröffentlichungstag und Bekanntmachung des Hinweises auf die Patenterteilung: **17.07.2019**
(21) Anmeldenummer: 18151996.8
(22) Anmeldetag: 17.01.2018
(51) Int. Cl.: H02J 3/06, H02J 3/32, H02J 3/18, H02J 7/00, H02J 7/34

(54) **VERFAHREN UND VORRICHTUNG ZUR STABILISIERUNG EINER FREQUENZ IN EINEM WECHSELSPANNUNGSNETZ**
METHOD AND DEVICE FOR STABILISING A FREQUENCY IN AN ALTERNATING CURRENT NETWORK
PROCÉDÉ ET DISPOSITIF DE STABILISATION D'UNE FRÉQUENCE DANS UN RÉSEAU À TENSION ALTERNATIVE

(30) Priorität: 13.02.2017 DE 102017202209
(43) Veröffentlichungstag der Anmeldung: 15.08.2018
(73) Patentinhaber: Siemens Aktiengesellschaft, 80333 München (DE)
(72) Erfinder: Spahic, Ervin, 91052 Erlangen (DE)

(56) Entgegenhaltungen:
- WO-A1-2015/113637
- US-A1- 2014 183 961
- US-A1- 2014 365 027

## Beschreibung

Die Erfindung betrifft ein Verfahren zum Stabilisieren einer Frequenz in einem Wechselspannungsnetz, bei dem Wirkleistung zwischen dem Wechselspannungsnetz und einem dazu vorgesehenen Energiespeicher einer Kompensationsanlage ausgetauscht wird.

Ein solches Verfahren ist aus der WO 2007/102758 A1 bekannt. Dort ist eine Leistungskompensationsanlage beschrieben, die sowohl Blindleistung als auch Wirkleistung mit dem Wechselspannungsnetz austauschen kann. Die bekannte Leistungskompensationsanlage umfasst einen Umrichter, der auch als STATCOM (Static Var Compensator) bezeichnet wird, der wechselspannungsseitig über einen Transformator mit dem Wechselspannungsnetz verbunden ist. In einer Parallelschaltung zu der Gleichspannungsseite des Umrichters ist eine Kapazität angeordnet. Die Leistungskompensationsanlage umfasst ferner einen Energiespeicher in Form von Batterien, der parallel zur Kapazität angeordnet ist.

Dokumente WO 2015/113637 A1, US 2014/365027 A1 und US 2014/183961 A1 offenbaren ein Verfahren zum Stabilisieren einer Frequenz in einem Wechselspannungsnetz, bei dem Wirkleistung zwischen dem Wechselspannungsnetz und einem Energiespeicher ausgetauscht wird.

Durch einen Austausch der Wirkleistung zwischen dem Energiespeicher und dem Wechselspannungsnetz kann die Frequenz im Wechselspannungsnetz beeinflusst werden. Ist das Wechselspannungsnetz beispielsweise ein Energieversorgungsnetz, so ist die Grundfrequenz einer Wechselspannung im Wechselspannungsnetz meist 50 Hz oder 60 Hz. Diese Frequenz soll nach Möglichkeit in der Zeit konstant bleiben. Sie kann jedoch auch zeitlichen Fluktuationen unterliegen, beispielsweise aufgrund einer geänderten Leistungsaufnahme durch angeschlossene Verbraucher und/oder Leistungsabgabe durch angeschlossene Erzeuger.

Mittels des eingangs genannten Verfahrens kann die Frequenz dann dadurch stabilisiert werden, dass bei einer Frequenzerhöhung im Wechselspannungsnetz (Überfrequenz) die Kompensationsanlage zu einer Wirkleistungsaufnahme und bei einer Frequenzsenkung (Unterfrequenz) zu einer Wirkleistungsabgabe veranlasst wird.

Der Energiespeicher verfügt im Allgemeinen über eine begrenzte Wirkleistungsaufnahmekapazität. Üblicherweise kann die Wirkleistung über einen Zeitraum von höchstens wenigen Sekunden aufgenommen bzw. abgegeben werden. Dadurch kann das Problem entstehen, dass der Energiespeicher bei Überfrequenz bereits vollständig gefüllt bzw. bei Unterfrequenz vollständig entleert sein kann, so dass das obige Verfahren nicht erfolgreich durchgeführt werden kann.

Die Aufgabe der Erfindung besteht darin, ein artgemäßes Verfahren anzugeben, dass möglichst zuverlässig ist.

Die Aufgabe wird bei einem eingangs genannten Verfahren erfindungsgemäß dadurch gelöst, dass eine elektrische Leistung gemessen wird, die in einem Interkonnektor übertragen wird, der das Wechselspannungsnetz mit einem weiteren Wechselspannungsnetz verbindet, und in Abhängigkeit von einer Richtung der übertragenen Leistung mittels einer Regelungseinrichtung der Kompensationsanlage der Austausch der Wirkleistung veranlasst wird.

Die Erfindung basiert auf der Erkenntnis, dass der Interkonnektor ein kritischer Pfad des Wechselspannungsnetzes ist. Der Interkonnektor kann zweckmäßigerweise eine HVDC- oder eine HVAC-Verbindung sein (Hochspannungsgleichstromverbindung oder Hochspannungswechselstromverbindung). Mittels solcher Verbindungen werden oftmals zwei Versorgungsnetze miteinander verbunden. Große Frequenzschwankungen entstehen beispielsweise bei Ausfall des Interkonnektors. Zudem kann das weitere Wechselspannungsnetz als ein besonders großer Verbraucher bzw. Erzeuger elektrischer Leistung auftreten. Somit kann die im Interkonnektor übertragene Leistung als ein besonders geeigneter Indikator des Frequenzverhaltens dienen. Dieser Indikator kann dazu genutzt werden, die Energiespeieher auf eine künftige Aktion vorzubereiten, beispielsweise für einen Ausfall des Interkonnektors.

Wird beispielsweise eine positive übertragene Leistung gemessen, so wird eine Wirkleistungsaufnahme veranlasst, so dass der Energiespeicher geladen wird. Bei einer negativen übertragenen Leistung wird eine Leistungsabgabe veranlasst, so dass der Energiespeicher entsprechend entleert wird. Dabei wird eine gemessene übertragene Leistung als positiv bezeichnet, wenn elektrische Leistung aus dem weiteren Wechselspannungsnetz in das Wechselspannungsnetz übertragen wird. Entsprechend wird gemessene übertragene Leistung als negativ bezeichnet, wenn elektrische Leistung aus dem Wechselspannungsnetz in das weitere Wechselspannungsnetz übertragen wird.

Vorzugsweise wird der Energiespeicher in Abhängigkeit von der Richtung des Leistungsflusses vollständig entladen oder vollständig aufgeladen. Insbesondere kann der Energiespeicher bei positiver gemessener Leistung vollständig geladen und bei negativer gemessener Leistung vollständig entladen werden. Auf diese Weise ist eine maximal mögliche Bereitschaft zur Leistungskompensation hergestellt und ein besonders zuverlässiges Verfahren erreicht.

Gemäß einer Ausführungsform der Erfindung wird die von der Kompensationsanlage aufgenommene Wirkleistung in einzelnen in Reihe und/oder parallel geschalteten Speicherelementen des Energiespeichers gespeichert. Auf diese Weise wird die Wirkleistung bzw. die elektrisch Energie auf einzelne Speicherelemente verteilt. Die Speicherelemente sind geeigneterweise auf eine Spannung von über 1 kV ausgelegt. Die Verteilung der Wirkleistung auf die Speicherelemente erlaubt einen besonders effektiven und zugleich kostengünstigen Wirkleistungsaustausch mit dem Wechselspannungsnetz.

Bevorzugt wird die Wirkleistung nur dann aufgenommen oder abgegeben, wenn der Betrag der gemessenen Leistung einen vorgegebenen Schwellenwert überschreitet. Auf diese Weise wird vermieden, dass das Laden bzw. Entladen des Energiespeichers bereits bei kleinen bzw. unerheblichen übertragenen Leistungen ausgelöst wird. Dies erhöht die Zuverlässigkeit des Verfahrens und senkt die Belastung des Energiespeichers.

Die Erfindung betrifft ferner eine Anlage zum Stabilisieren eines Wechselspannungsnetzes mit einer Kompensationsanlage zum Austausch von Wirkleistung und Blindleistung mit dem Wechselspannungsnetz, wobei die Wirkleistung zwischen dem Wechselspannungsnetz und einem dazu vorgesehenen Energiespeicher der Kompensationsanlage austauschbar ist.

Eine solche Anlage ist aus der bereits erwähnten WO 2007/102758 A1 bekannt.

Die Aufgabe der Erfindung ist es, eine solche Anlage bereitzustellen, die möglichst zuverlässig für eine Stabilisierung der Frequenz im Wechselspannungsnetz sorgen kann.

Die Aufgabe wird bei einer artgemäßen Anlage erfindungsgemäß durch eine Messvorrichtung zum Messen einer elektrischen Leistung in einem Interkonnektor, der das Wechselspannungsnetz mit einem weiteren Wechselspannungsnetz verbindet, sowie eine Regelungseinrichtung der Kompensationsanlage gelöst, die dazu eingerichtet ist, in Abhängigkeit von einer Richtung der gemessenen, im Interkonnektor übertragenen Leistung den Austausch der Wirkleistung zwischen der Kompensationsanlage und dem Wechselspannungsnetz zu veranlassen.

Die wichtigsten Vorteile der erfindungsgemäßen Anlage ergeben sich aus der Möglichkeit der Durchführung des zuvor beschriebenen erfindungsgemäßen Verfahrens.

Die Anlage ist zweckmäßigerweise dazu eingerichtet, Blindleistung mit dem Wechelspannungsnetz auszutauschen. Dadurch ist mit der Anlage eine Wirk- und Blindleistungskompensationsanlage bereitgestellt. Die Anlage kann dazu Zwischenkondensatoren (die auch als Zwischenkreiskondensatoren bezeichnet werden können) sowie steuerbare Schalter umfassen, so dass mittels geeigneter Steuerung der Zwischenkondensatoren Blindleistung mit dem Wechselspannungsnetz ausgetauscht werden kann. Die Zwischenkondensatoren und der Energiespeicher sind dabei separate Elemente der Anlage.

Gemäß einer Ausführungsvariante der Erfindung umfasst der Energiespeicher eine Vielzahl einzelner Speicherelemente, die miteinander in Reihe und/oder parallel geschaltet sind. Ein solcher Energiespeicher kann besonders kostengünstig hergestellt werden, und zwar unter Beibehaltung eines zuverlässigen Austausches der Wirkleistung mit dem Wechselspannungsnetz.

Die Speicherelemente können dabei als sogenannte Supercaps, die auch als Superkondensatoren bezeichnet werden, Ultracaps oder Doppelschichtkondensatoren, ausgeführt sein. Speicherelemente dieser Art weisen eine besonders hohe Leistungsdichte auf, so dass sie besonders schnell auf- und entladen werden können. Damit kann die Anlage auf Frequenzschwankungen im Wechselspannungsnetz besonders schnell reagieren. Die Speicherelemente können ferner Batteriespeicher sein.

Da im Wechselspannungsnetz üblicherweise Spannungen von über 100 kV eingesetzt werden, wird es als vorteilhaft angesehen, wenn die Speicherelemente an ihren Klemmen eine Spannung von mehr als 1 kV aufbauen können. Durch die Reihenschaltung der Speicherelemente kann eine entsprechend hohe Gesamtspannung erreicht werden.

Gemäß einer Ausführungsform der Erfindung umfasst die Kompensationsanlage einen Umrichter mit einer Mehrzahl von Umrichterarmen, wobei jeder der Umrichterarme eine Reihenschaltung von Halbleiterschaltmodulen aufweist, und der Energiespeicher in einer Parallelschaltung zu wenigstens einem der Umrichterarme angeordnet ist. Damit ist der Umrichter ein sogenannter modularer Mehrstufenumrichter (MMC). Der MMC kann beispielsweise dreiphasig aufgebaut sein. Gemäß einer Ausführungsvariante umfasst der MMC drei Umrichterphasen mit jeweils zwei Umrichterarmen. Jede Umrichterphase erstreckt sich zwischen einem positiven und einem negativen Gleichspannungspol. Die Umrichterarme einer Umrichterphase sind in Reihe miteinander verbunden, wobei zwischen den Umrichterarmen jeweils ein Wechselspannungsanschluss zum Verbinden des MMC mit einer Phase des Wechselspannungsnetzes angeordnet ist. Der Energiespeicher ist parallel zu den Umrichterphasen zwischen dem positiven und dem negativen Gleichspannungspol geschaltet.

Bevorzugt umfassen die Halbleiterschaltmodule jeweils Halbleiterschalter sowie einen Zwischenkondensator, die in einer Vollbrückenmodulschaltung miteinander verschaltet sind. Eine Vollbrückenmodulschaltung zeichnet sich dadurch aus, dass zwei Reihenschaltungen von zwei Halbleiterschaltern parallel geschaltet sind, wobei parallel zu den Reihenschaltungen der Halbleiterschalter der Zwischenkondensator angeordnet ist. Die Vollbrückenmodulschaltung weist zwei Anschlussklemmen auf, wovon eine mit einem Potenzialpunkt zwischen den Halbleiterschaltern der einen Reihenschaltung und die andere mit einem Potenzialpunkt zwischen den Halbleiterschaltern der anderen Reihenschaltung angeordnet ist. An den an Anschlussklemmen des Halbleiterschaltmoduls eine an dem Zwischenkondensator abfallende Kondensatorspannung, eine Nullspannung oder aber die inverse Kondensatorspannung erzeugbar ist.

Im Rahmen der Erfindung können selbstverständlich alle zuvor im Zusammenhang mit dem erfindungsgemäßen Verfahren beschriebenen Ausführungsvarianten und Merkmale auch im Zusammenhang mit der erfindungsgemäßen Anlage (oder auch umgekehrt), einzeln oder in Kombination, eingesetzt werden.

Die Erfindung soll im Folgenden anhand von in den Figuren 1 bis 3 dargestellten Ausführungsbeispielen weiter erläutert werden.
Figur 1 zeigt ein Ausführungsbeispiel einer erfindungsgemäßen Anlage in einer schematischen Darstellung;
Figur 2 zeigt ein Ausführungsbeispiel einer Vollbrückenmodulschaltung in einer schematischen Darstellung;
Figur 3 zeigt ein schematisches Ablaufdiagramm eines Ausführungsbeispiels eines erfindungsgemäßen Verfahrens.

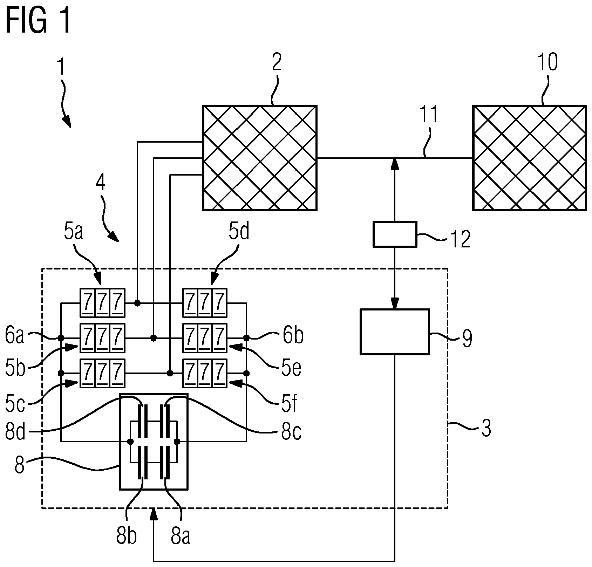

Im Einzelnen ist in Figur 1 eine Anlage 1 zum Stabilisieren einer Frequenz in einem Wechselspannungsnetz 2 dargestellt. Die Anlage 1 umfasst eine Kompensationsanlage 3, die einen Wechselspannungsanschluss 4 zum Anschluss an das Wechselspannungsnetz 2 aufweist. Damit ist die Kompensationsanlage 3 wechselspannungsseitig mit dem Wechselspannungsnetz 2 verbindbar. Die Kompensationsanlage umfasst sechs Umrichterarme 5a-5f, die in einer Doppelsternschaltung miteinander verbunden sind. Die drei Umrichterarme 5a-c sind in einem ersten Sternpunkt 6a, die Umrichterarme 5d-f in einem zweiten Sternpunkt 6b miteinander verbunden.

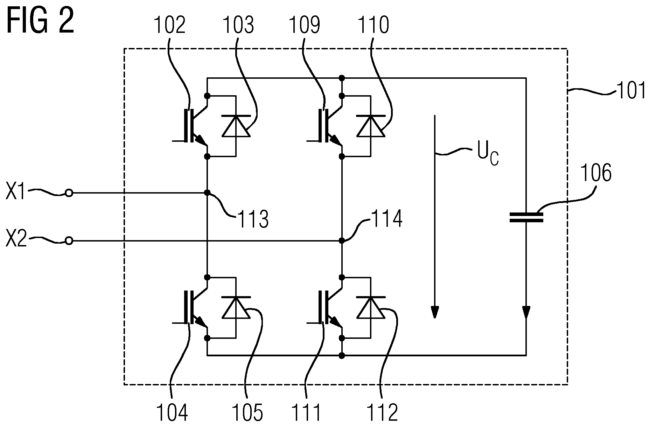

Jeder Umrichterarm 5a-f weist eine Reihenschaltung von (im Ausführungsbeispiel der Figur 1 gleichartig aufgebauten) Halbleiterschaltmodulen 7. Auf den Aufbau der Halbleiterschaltmodule 7 wird in der folgenden Figur 2 näher eingegangen. Aus Gründen der Übersichtlichkeit sind in Figur 1 lediglich drei Halbleiterschaltmodule 7 dargestellt, deren Anzahl aber grundsätzlich beliebig und an die jeweilige Anwendung angepasst sein kann.

Die Kompensationsanlage 3 umfasst ferner einen Energiespeicher 8, der parallel zu den drei Umrichterphasen angeordnet ist. Der Energiespeicher 8 umfasst eine Mehrzahl von Speicherelementen 8a - 8d, die im dargestellten Beispiel in zwei parallelgeschalteten Reihenschaltungen angeordnet sind. Eine Regelungseinrichtung 9 zur Regelung der Kompensationsanlage 3 erlaubt eine derartige Steuerung der Halbleiterschaltmodule 7, dass ein Austausch von Wirkleistung mit dem Wechselspannungsnetz 2 ermöglicht ist.

Das Wechselspannungsnetz 2 ist mit einem weiteren Wechselspannungsnetz 10 über einen Interkonnektor 11 verbunden. Der Interkonnektor 11 ist im dargestellten Beispiel eine HVDC-Verbindung mit einer Spannung von 320 kV. Die Spannungen in den beiden Wechselspannungsnetzen 2, 10 betragen jeweils 380 kV AC. Eine Messeinrichtung 12 ist dazu eingerichtet eine im Interkonnektor 11 übertragene Leistung zu messen. Die Messeinrichtung 12 ist ausgangsseitig mit der Regelungseinrichtung 9 verbunden, so dass die Regelung der Kompensationsanlage 3 unter Verwendung der gemessenen übertragenen Leistung vorgenommen wird. Die Messung der Leistung kann beispielsweise über eine Strom- und Spannungsmessung erfolgen.

Ein Beispiel eines Halbleiterschaltmoduls 7 in Form einer Vollbrückenmodulschaltung 101 ist in Figur 2 schematisch dargestellt. Die Vollbrückenmodulschaltung 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenmodulschaltung 101 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Zwischenkondensator 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Zwischenkondensator 106 abfallenden Spannung Uc, der am Zwischenkondensator 106 abfallenden Spannung jedoch mit entgegengesetzter Polarität (-Uc) oder der Spannung null entspricht.

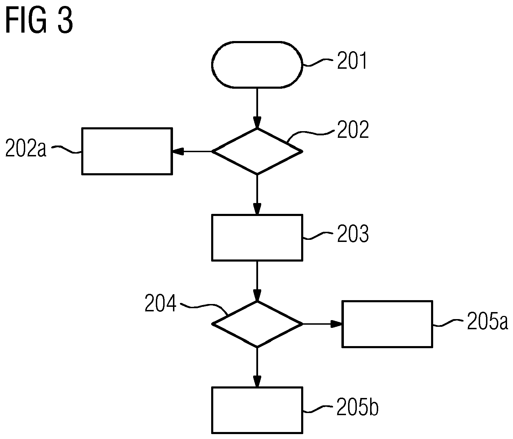

Anhand des Ablaufdiagramms der Figur 3 sollen die einzelnen Verfahrensschritte eines Ausführungsbeispiels des erfindungsgemäßen Verfahrens erläutert werden. Das Verfahren kann beispielsweise mittels der in Figur 1 dargestellten Anlage 1 durchgeführt werden.

In einem ersten Verfahrensschritt 201 wird eine Leistung P gemessen, die im Interkonnektor 11 zwischen den beiden Wechselspannungsnetzen 2, 10 übertragen wird.

In einem zweiten Verfahrensschritt 202 wird überprüft, ob die der Betrag |P| der gemessenen übertragenen Leistung P größer als ein vordefinierter Leistungsschwellwert X ist. Falls |P| <=X, so wird weiter nichts unternommen, was mit einem Block 202a angedeutet ist.

Falls der Betrag der gemessenen übertragenen Leistung P größer als der Leistungsschwellenwert X ist, so wird in einem dritten Verfahrensschritt 203 die Richtung der übertragenen Leistung P bestimmt. Dabei wird eine Leistung, die vom Wechselspannungsnetz 2 in das weitere Wechselspannungsnetz 10 übertragen wird, als negativ bezeichnet, eine dem entgegengesetzt übertragene Leistung als positiv.

In einem vierten Verfahrensschritt 204 wird überprüft, ob eine positive oder negative gemessene Leistung P vorliegt.

Falls eine negative Leistung vorliegt, so wird in einem fünften Verfahrensschritt 205a eine vollständige Entladung des Energiespeichers 8 der Kompensationsanlage 3 veranlasst. Auf diese Weise ist der Energiespeicher 8 für den Fall der Überfrequenz im Wechselspannungsnetz 2 vorbereitet.

Falls eine positive Leistung vorliegt, so wird in einem alternativen fünften Verfahrensschritt 205b eine vollständige Aufladung des Energiespeichers 8 der Kompensationsanlage 3 veranlasst. Auf diese Weise ist der Energiespeicher 8 für den Fall der Unterfrequenz im Wechselspannungsnetz 2 vorbereitet.

## Patentansprüche

1. Verfahren zum Stabilisieren einer Frequenz in einem Wechselspannungsnetz (2), bei dem Wirkleistung zwischen dem Wechselspannungsnetz (2) und einem dazu vorgesehenen Energiespeicher (8) einer Kompensationsanlage (3) ausgetauscht wird,
**dadurch gekennzeichnet, dass**
- eine elektrische Leistung gemessen wird, die in einem Interkonnektor (11) übertragen wird, der das Wechselspannungsnetz (2) mit einem weiteren Wechselspannungsnetz (10) verbindet, und
- in Abhängigkeit von einer Richtung der übertragenen Leistung mittels einer Regelungseinrichtung (9) der Kompensationsanlage (3) der Austausch der Wirkleistung veranlasst wird.

2. Verfahren nach Anspruch 1, wobei der Energiespeicher (8) in Abhängigkeit von der Richtung des Leistungsflusses vollständig entladen oder vollständig aufgeladen wird.

3. Verfahren nach einem der vorangehenden Ansprüche, wobei die von der Kompensationsanlage (3) aufgenommene Wirkleistung in einzelnen in Reihe und/oder parallel geschalteten Speicherelementen (8a-d) des Energiespeichers (8) gespeichert wird.

4. Verfahren nach einem der vorangehenden Ansprüche, wobei die Wirkleistung nur dann aufgenommen oder abgegeben wird, wenn der Betrag der gemessenen Leistung einen vorgegebenen Schwellenwert überschreitet.

5. Anlage (1) zum Stabilisieren eines Wechselspannungsnetzes (2) mit einer Kompensationsanlage (3) zum Austausch von Wirkleistung und Blindleistung mit dem Wechselspannungsnetz (2), wobei die Wirkleistung zwischen dem Wechselspannungsnetz (2) und einem dazu vorgesehenen Energiespeicher (8) der Kompensationsanlage (3) austauschbar ist,
**gekennzeichnet durch**
- eine Messvorrichtung (12) zum Messen einer elektrischen Leistung in einem Interkonnektor (11), der das Wechselspannungsnetz (2) mit einem weiteren Wechselspannungsnetz (10) verbindet, sowie
- eine Regelungseinrichtung (9) der Kompensationsanlage (3), die dazu eingerichtet ist, in Abhängigkeit von einer Richtung der gemessenen, im Interkonnektor (11) übertragenen Leistung den Austausch der Wirkleistung zwischen der Kompensationsanlage (3) und dem Wechselspannungsnetz (2) zu veranlassen.

6. Anlage (1) nach Anspruch 5, wobei der Energiespeicher (8) eine Vielzahl einzelner Speicherelemente (8a-d) umfasst, die miteinander in Reihe und/oder parallel geschaltet sind.

7. Anlage (1) nach einem der Ansprüche 5 oder 6, wobei die Speicherelemente (8a-d) als Supercaps und/oder als Batteriespeicher ausgeführt sind.

8. Anlage (1) nach einem der Ansprüche 5 bis 7, wobei die Speicherelemente (8a-d) an ihren Klemmen eine Spannung von mehr als 1 kV aufbauen können.

9. Anlage (1) nach einem der Ansprüche 5 bis 8, wobei die Kompensationsanlage (3) einen Umrichter mit einer Mehrzahl von Umrichterarmen (5a-f) umfasst, wobei jeder der Umrichterarme (5a-f) eine Reihenschaltung von Halbleiterschaltmodulen (7) aufweist, und der Energiespeicher (8)in einer Parallelschaltung zu wenigstens einem der Umrichterarme (5a-f) angeordnet ist.

10. Anlage (1) nach Anspruch 9, wobei die Halbleiterschaltmodule (7) jeweils Halbleiterschalter (102, 104, 109, 111) sowie einen Zwischenkondensator (106) umfassen, die in einer Vollbrückenmodulschaltung miteinander verschaltet sind.

## Claims

1. Method for stabilizing a frequency in an AC voltage grid (2), in which active power is exchanged between the AC voltage grid (2) and an energy store (8) of a compensation installation (3), said energy store being provided for this purpose,
**characterized in that**
- an electrical power is measured, said electrical power being transmitted in an interconnector (11) that connects the AC voltage grid (2) to a further AC voltage grid (10), and
- the exchange of the active power is initiated by means of a regulating device (9) of the compensation installation (3) depending on a direction of the transmitted power.

2. Method according to Claim 1, wherein the energy store (8) is fully discharged or fully charged depending on the direction of the flow of power.

3. Method according to either of the preceding claims, wherein the active power drawn by the compensation installation (3) is stored in individual storage elements (8a-d) of the energy store (8) that are connected in series and/or in parallel.

4. Method according to one of the preceding claims, wherein the active power is drawn or delivered only when the magnitude of the measured power exceeds a prescribed threshold value.

5. Installation (1) for stabilizing an AC voltage grid (2) having a compensation installation (3) for exchanging active power and reactive power with the AC voltage grid (2), wherein the active power can be exchanged between the AC voltage grid (2) and an energy store (8) of the compensation installation (3), said energy store being provided for this purpose,
**characterized by**
- a measuring apparatus (12) for measuring an electrical power in an interconnector (11) that connects the AC voltage grid (2) to a further AC voltage grid (10), and
- a regulating device (9) of the compensation installation (3), which is configured to initiate the exchange of the active power between the compensation installation (3) and the AC voltage grid (2) depending on a direction of the measured power transmitted in the interconnector (11).

6. Installation (1) according to Claim 5, wherein the energy store (8) comprises a multiplicity of individual storage elements (8a-d), which are connected to one another in series and/or in parallel.

7. Installation (1) according to either of Claims 5 and 6, wherein the storage elements (8a-d) are embodied as supercaps and/or as battery stores.

8. Installation (1) according to one of Claims 5 to 7, wherein the storage elements (8a-d) can establish a voltage of more than 1 kV at the terminals of said storage elements.

9. Installation (1) according to one of Claims 5 to 8, wherein the compensation installation (3) comprises a converter having a plurality of converter arms (5a-f), wherein each of the converter arms (5a-f) has a series circuit of semiconductor switching modules (7), and the energy store (8) is arranged in a parallel circuit with at least one of the converter arms (5a-f).

10. Installation (1) according to Claim 9, wherein the semiconductor switching modules (7) each comprise semiconductor switches (102, 104, 109, 111) and an intermediate capacitor (106), which are interconnected with one another in a full-bridge module circuit.

## Revendications

1. Procédé de stabilisation d'une fréquence dans un réseau (2) à tension alternative, dans lequel on échange de la puissance active entre le réseau (2) à tension alternative et un accumulateur (8) d'énergie prévu pour cela d'un système (3) de compensation,
**caractérisé en ce que**
- on mesure une puissance électrique transmise dans un interconnecteur (11), qui relie le réseau (2) à tension alternative à un autre réseau (10) à tension alternative et
- en fonction d'un sens de la puissance transmise, on provoque l'échange de la puissance active au moyen d'un dispositif (9) de réglage du système (3) de compensation.

2. Procédé suivant la revendication 1, dans lequel on décharge complètement ou on charge complètement l'accumulateur (8) d'énergie en fonction du sens du flux de puissance.

3. Procédé suivant l'une des revendications précédentes, dans lequel on accumule la puissance active absorbée par le système (3) de compensation dans des éléments (8a-d) d'accumulation, montés en série ou en parallèle, de l'accumulateur (8) d'énergie.

4. Procédé suivant l'une des revendications précédentes, dans lequel on absorbe ou on cède la puissance active, seulement si de la puissance mesurée dépasse une valeur de seuil donnée à l'avance.

5. Système (1) de stabilisation d'un réseau (2) à tension alternative par un système (3) de compensation pour échanger de la puissance active et de la puissance réactive avec le réseau (2) à tension alternative, la puissance active pouvant être échangée entre le réseau (2) à tension alternative et un accumulateur (8) d'énergie prévu à cet effet du système (3) de compensation,
**caractérisé par**
- un dispositif (12) de mesure pour mesurer une puissance électrique dans un interconnecteur (11), qui relie le réseau (2) à tension alternative à un autre réseau (10) à tension alternative, ainsi que par
- un dispositif (9) de réglage du système (3) de compensation conçu pour provoquer, en fonction d'un sens de la puissance mesurée transmise dans l'interconnecteur (11), l'échange de puissance active entre le système (3) de compensation et le réseau (2) à tension alternative.

6. Système (1) suivant la revendication 5, dans lequel l'accumulateur (8) d'énergie comprend une pluralité d'éléments (8a-d) d'accumulation individuels, qui sont montés entre eux en série et/ou en parallèle.

7. Système (1) suivant l'une des revendications 5 ou 6, dans lequel les éléments (8a-d) d'accumulation sont réalisés en supercaps et/ou en accumulateur de batterie.

8. Système (1) suivant l'une des revendications 5 à 7, dans lequel les éléments (8a-d) d'accumulateur peuvent établir à leur borne une tension de plus de 1 kV.

9. Système (1) suivant l'une des revendications 5 à 8, dans lequel le système (3) de compensation comprend un convertisseur ayant une pluralité de bras (5a-f), chacun des bras (5a-f) du convertisseur ayant un circuit-série de modules (7) de commutation à semi-conducteur et l'accumulateur (8) d'énergie est monté dans un circuit en parallèle à au moins l'un des bras (5a-f) du convertisseur.

10. Système (1) suivant la revendication 9, dans lequel les modules (7) de commutation à semi-conducteur ont chacun des interrupteurs (102, 104, 109, 111) à semi-conducteur, ainsi qu'un condensateur (106) intermédiaire, qui sont montés entre eux suivant un circuit de module à pont complet.
